# EUROPEAN PATENT SPECIFICATION

(11) **EP 3 301 025 B1**
(45) Date of publication and mention of the grant of the patent: **04.08.2021**
(21) Application number: 17191993.9
(22) Date of filing: 20.09.2017
(51) Int. Cl.: B64D 15/20, G01S 17/95, G01S 7/48, G01N 21/49, B64D 43/00, B64D 45/00, B64D 47/02, G01S 17/86, G01S 17/87, G01N 21/53, G01N 21/47

(54) **LASER PARTICLE SENSOR AND APPARATUS AND METHOD FOR LASER PARTICLE SENSOR EYE SAFETY**
LASERPARTIKELSENSOR UND VORRICHTUNG UND VERFAHREN FÜR DIE AUGENSICHERHEIT EINES LASERPARTIKELSENSORS
CAPTEUR DE PARTICULES LASER ET APPAREIL ET PROCÉDÉ DE SÉCURITÉ OCULAIRE D'UN CAPTEUR DE PARTICULES LASER

(30) Priority: 29.09.2016 US 201662401699 P; 08.02.2017 US 201715427087
(43) Date of publication of application: 04.04.2018
(73) Proprietor: Honeywell International Inc., Morris Plains, NJ 07950 (US)
(72) Inventor: GARDE, Jason, Morris Plains, NJ 07950 (US); FAN, Xiao Zhu, Morris Plains, NJ 07950 (US); LODDEN, Grant, Morris Plains, NJ 07950 (US); KIMMEL, Danny Thomas, Morris Plains, NJ 07950 (US)
(74) Representative: Houghton, Mark Phillip

(56) References cited:
- WO-A2-2014/132074
- US-A- 6 091 335
- US-A1- 2007 097 350
- US-A1- 2009 273 770
- US-A1- 2012 242 974
- US-A1- 2013 240 672
- US-A1- 2014 330 459
- US-B1- 6 542 831
- SCHERBARTH S ET AL: "Eye safe Laser based DIRCM Systems", VISUAL COMMUNICATIONS AND IMAGE PROCESSING; 20-1-2004 - 20-1-2004; SAN JOSE,, vol. 7483, no. 74830H, 25 September 2009 (2009-09-25), pages 74830H-1, XP007913202, DOI: 10.1117/12.830316 ISBN: 978-1-62841-730-2

## Description

### BACKGROUND

Particles such as dust, ash, and ice can cause damage to an aircraft, such as to the jet engines of an aircraft. Therefore, it is desirable to detect particles. Laser based particle sensing is an attractive technology for aircraft and other vehicles. However, laser beams, which can travel long distances, can damage eyesight or temporarily obscure vision. In some cases, the incident laser beam may have a power level that exceeds prescribed maximum permissible exposure levels

Thus, laser based particle can pose a potential safety concern for aircraft pilots, maintenance personnel, or citizens. In order to be certified for use on aircraft or other vehicles, it must be shown that these eye safety concerns are addressed before laser based particle sensors are approved for use. For the reasons stated above, there is a need in the art for laser based particle sensor techniques that address eye safety requirements.

US2014/330459A1 discloses an optical device mounted on the interior of an aircraft for distinguishing the morphology of individual atmospheric particle, identifying them as water droplets, ice crystals, dust particles or volcanic ash, including a source of collimated, polarized light and providing this information to the flight crew to assist them in making informed decisions on conditions that might impact aircraft performance.

US 6091335A discloses an optical device on board an aircraft for detecting icing conditions including an optical beam emitter to create at least one illuminated external volume of measurement through which there circulates a flow of air charged with water particles; a collector optical system for the collection of at least a part of back-scattered light; a photodetector for detecting the back-scattered light; a single processor for processing a signal delivered by the photodetector to compute a severity of the icing conditions; and an information provider for providing information on the calculated severity of the icing conditions.

US2013/240672 A1 discloses an icing condition detection system comprising a number of sensors and an icing condition detector. The number of sensors is located in a number of locations on an aircraft. A sensor in the number of sensors is configured to emit electromagnetic radiation into drops of water in an environment around the aircraft, to detect responses to the electromagnetic radiation, and to generate data from the responses. The icing conditions detector is configured to monitor for the data from the number of sensors, and to detect a presence of a number of types of icing conditions for the aircraft using the data from the number of sensors.

### SUMMARY

The present invention, in its various aspects, is as set out in the appended claims. There is provided a system comprising a vehicle and a laser particle sensor, according to claim 1, and there is provided a corresponding method according to claim 7.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a block diagram of a vehicle that includes a laser particle sensor;
Figure 2 illustrates examples of non-claimed mounting configurations for laser particle sensors on a vehicle;
Figure 3 illustrates a non-claimed example of a laser particle sensor on a vehicle;
Figure 4 illustrates a non-claimed example of a mounting configuration for a laser particle sensor;
Figure 5 illustrates embodiments of a mounting configurations for laser particle sensors on a vehicle, according to the invention;
Figure 6 illustrates embodiments of mounting configurations for laser particle sensors on a vehicle, according to the invention;
Figure 7 illustrates embodiments of mounting configurations for laser particle sensors on a vehicle;
Figure 8 illustrates embodiments of mounting configurations for laser particle sensors on a vehicle, according to the invention;
Figures 9A and 9B illustrate examples of multiple stages of operation of laser particle sensors mounted on a vehicle;
Figure 10 illustrates safe zone ranges for operation of a laser particle sensor;
Figure 11A illustrates an example of operation of one or more laser particle sensors configured so that each of the one or more laser particle sensors operates in normal power mode when each would project light away from terrain over which a vehicle, on which the one or more laser particle sensors are mounted, travels; and
Figure 11B illustrates an example of operation of one or more laser particle sensors configured so that only laser particle sensor(s) operate in normal power mode when the vehicle, on which the one or more laser particle sensors are mounted, is traveling at or above a specified altitude, is at a specific geographic location, or is travelling at or above vector velocity.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

The examples and embodiments described below generally include mounting configurations and methods of operation for a laser particle sensor on a vehicle that can be used to address eye safety requirements. In some embodiments, a laser particle sensor is mounted with a particular configuration that reduces the likelihood of eye exposure to optical energies exceeding the prescribed maximum permissible exposure levels. In some examples outside the scope of the appended claims, the laser particle sensor is mounted on the vehicle such that the optical transceiver of the laser particle sensor transmits one or more laser light beams, away from terrain over which the vehicle is travelling, approximately parallel to a vertical axis of the body of the vehicle. In another embodiment, the laser particle sensor is mounted on the vehicle such that the laser transceiver of the laser particle sensor is configured to detect particles in a volume of freestream fluid, e.g. air, in a measurement region proximate to the vehicle and transmits one or more laser light beam toward another part of the vehicle, which acts as a backstop for the one or more laser light beams. Freestream fluid is fluid whose flow is undisturbed by the vehicle. Hereinafter, undisturbed fluid or undisturbed fluid flow shall also mean freestream fluid.

In some embodiments, a laser particle sensor is operated in a manner that reduces the likelihood of eye exposure to optical energies exceeding the prescribed maximum permissible exposure levels. In some embodiments, the laser particle sensor is operated such powers of that the one or more laser light beams transmitted by the laser transceiver are attenuated based on one or more operating parameters of the vehicle.

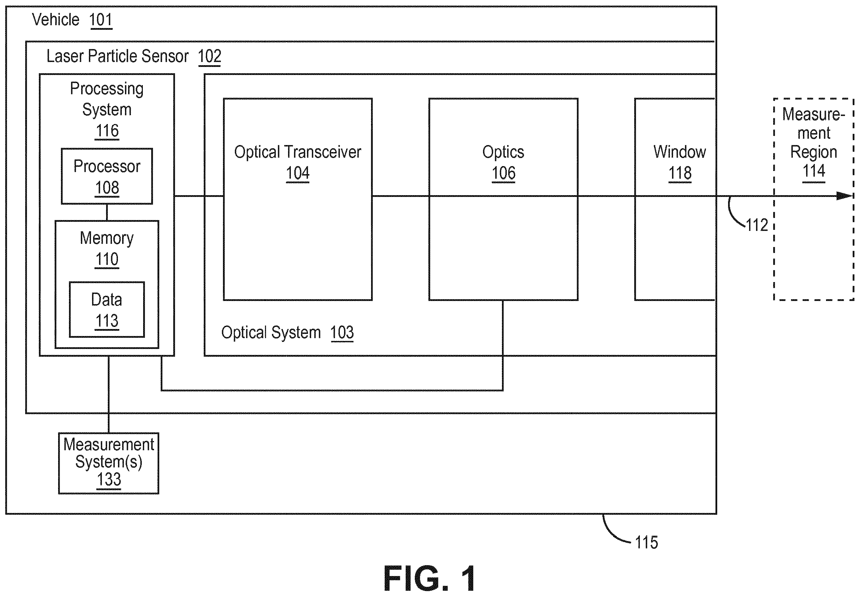

Figure 1 is a block diagram of a vehicle 101 that includes at least one laser particle sensor 102, *e.g*. implemented with a laser particle sensor system. Known particle sensors include, without limitation, the laser particle sensor disclosed in published US Patent Application serial number 14/059,165 published on November 6, 2014 with a publication number of US 2014/0330459 A1. In exemplary embodiments, the vehicle can be an aircraft, a ground based vehicle, a marine vessel, or any other type of vehicle.

The laser particle sensor 102 includes an optical system 103 coupled to a processing system 116. In one embodiment, the vehicle includes one or more measurement systems 133 coupled to the laser particle sensor 102.

In one embodiment, the optical system 103 includes at least one optical transceiver 104 and optics 106. In another embodiment, the optics 106 are coupled to the processing system 116. In yet another embodiment, the optical system 103 includes a window 118.

The at least one laser transceiver 104 is configured to transmit at least one laser light beam 112, and characterizes the reflected or backscattered light (*e.g.* due to Rayleigh scattering by molecules, Mie scattering by aerosols, and/or geometric scattering due by large particles such as water droplets and hail) in at least one measurement region 114. The light is backscattered by fine particles such as dust, ash and ice. In another embodiment, the laser particle sensor 102 is configured to ascertain the types, size (*e.g*. diameter), and densities of fine particles in at least one measurement region 114, *e.g.* by characterizing a freestream fluid flowing in the at least one measurement region 114.

In one embodiment, the optics 106 direct transmitted and backscattered light respectively from and to the optical transceiver 104. Thus, the optics 106 is optically coupled to the optical transceiver 104. In another embodiment, the optics 106 may include one or more lens and/or one or more mirrors. In a further embodiment, the optics 106 facilitate, e.g. using mirrors, transmitting light in, and receiving backscattered light from, one or more directions. In yet another embodiment, the optics can be used to focus the backscattered light to the optical transceiver 104 so that it can be detected. The optics 106 can be used to direct the one or more light beams 112 to at least one measurement region 114, and at different portions of the at least one measurement region 114. In yet another embodiment, the position of the optical transceiver 104 can be altered to direct the one or more light beams 112.

Thus, the optical system 103 can transmit and receive light in different directions within a region. Further, the optical system 103 can scan, transmitting and receiving light within such a region. In one embodiment, the processing system 116 controls the optics, *e.g*. to control the direction of the light beams 112.

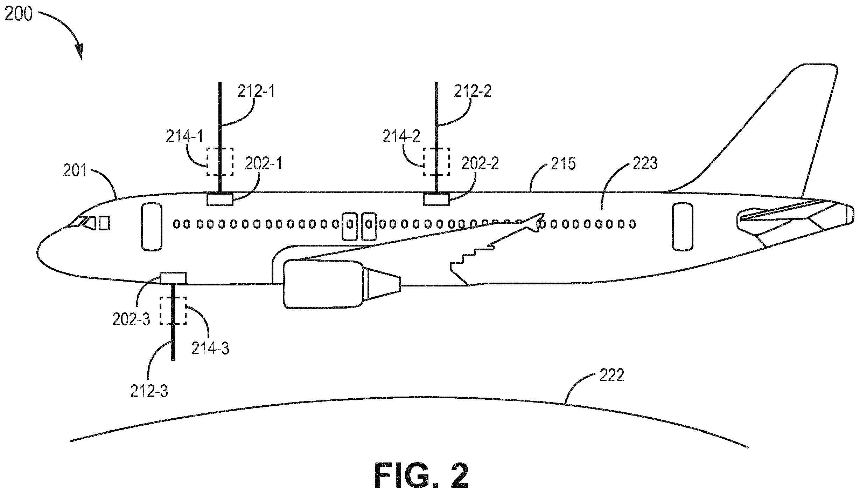

In one embodiment, the laser particle sensor 102, or alternatively only the optical system 103, is mounted on an outer surface, or skin, 115 of the vehicle 101. In another embodiment, the laser particle sensor 102, or alternatively only the optical system 103, is mounted within the vehicle 101, *e.g*. mounted near with the outer surface 115 of the vehicle 101. In a further embodiment, the optical system 103 includes a window 118 permitting light to be transmitted and received by the optical system 103, within the vehicle 101, through the outer surface 115 of the vehicle 101. The window 118 avoids having an opening, or penetration, which would undermine aerodynamics of the vehicle and/or undermine the environment within the vehicle 101 which may be, *e.g*. pressurized and/or oxygenated. As a result, the laser particle sensor 102 can be mounted flush to a surface of the vehicle 101. Flush mounting of the laser particle sensor 102 reduces drag of the vehicle 101 caused by the laser particle sensor 102. As will be discussed herein in greater detail with respect to Figures 2 through 10, the laser particle sensor 102 can generally be mounted to a variety of locations on the vehicle 101 and the laser light beams 112 can be directed in a variety of directions.

If only the optical system 103 is located proximate to the outer surface 115 of the vehicle 101, then the processing system can be located elsewhere in the vehicle 101. In one embodiment, the processing system 116 can be another component of the vehicle 101 such as a vehicle management system, *e.g.* a flight management system, or a vehicle management computer, *e.g*. a flight management computer.

The laser particle sensor 102 is generally configured or tuned to measure particles in the measurement region 114 proximate to the vehicle 101. In one embodiment, the laser particle sensor 102 is configured sense the presence, type, and/or density of particles in the measurement region 114. In another embodiment, the laser particle sensor 102 is configured to detect and analyze particles in a volume of freestream fluid, *e.g.* air, in a measurement region proximate to the vehicle.

In one embodiment, the laser particle sensor 102 analyzes the measurement region 114. In another embodiment, the measurement region 114 may or may not have fluid flow, *e.g.* the movement of matter. In the event the measurement region 114 has fluid flow, the fluid flow may be undisturbed or a disturbed. Disturbed fluid flow may be for example due to turbulence due to the proximity of a structure or a portion of an engine, such as a propeller or jet turbines. In a further embodiment, the fluid flow may be air flow. In yet another embodiment, the laser particle sensor 102 analyzes only freestream fluid flow, *e.g.* undisturbed airflow or freestream airflow. Because the invention is exemplified with respect to aircraft, the fluid flow may be characterized as the movement of airflow. However, the fluid flow is not limited to airflow.

In one embodiment, the laser particle sensor 102 has one or more laser light beams aimed at a fixed single measurement region, and thus are not scanned. In another embodiment, the measurement region 114 of the laser particle sensor 102 can be controlled by geometrically adjusting the field of view of the optics 106 with respect to the one or more laser light beams 112. In a further embodiment, the measurement region 114 can be controlled by adjusting the angle at which the one or more laser light beams 112 are transmitted from the laser transceiver 104 and/or the field of view of the optics 106.

In one embodiment, the laser particle sensor 102 also includes at least one processing system 116 coupled to the optical system 103. In another embodiment, the at least one processing system 116 includes at least one processing device 108 coupled to at least one memory 110. In a further embodiment, the at least one memory 110 includes data 113. In another embodiment, the data 113 may be stored in the format of a database

In one embodiment, the laser particle sensor 102 is coupled to one or more measurement systems 133. In another embodiment, the one or more measurement systems 130 may include one or more of: an altimeter system which may include a barometric altimeter and/or a radar altimeter, a speed and direction measuring system which may include a pitot tube and compass, an inertial navigation system which may include an inertial measurement unit with one or more accelerometers and gyroscopes, and/or a location determination system which may include a global navigation satellite system, *e.g.* GPS, receiver and mapping system and/or an inertial navigation system.

Since the power levels of the one or more laser light beams 112 transmitted by the laser particle sensor 102 do not substantially attenuate immediately after the measurement region(s) 114, humans can potentially be exposed to optical energies exceeding the prescribed maximum permissible exposure levels if proper eye safety measures are not taken. Figures 2 through 11B below illustrate exemplary mounting configurations and/or methods of operation for laser particle sensors (some of them outside the scope of the invention but useful to understand the invention), such as laser particle sensor 102, which address the concerns regarding eye safety when using laser particle sensors. These figures provide illustrations of vehicles that are aircraft; however, the same techniques are applicable to other vehicles.

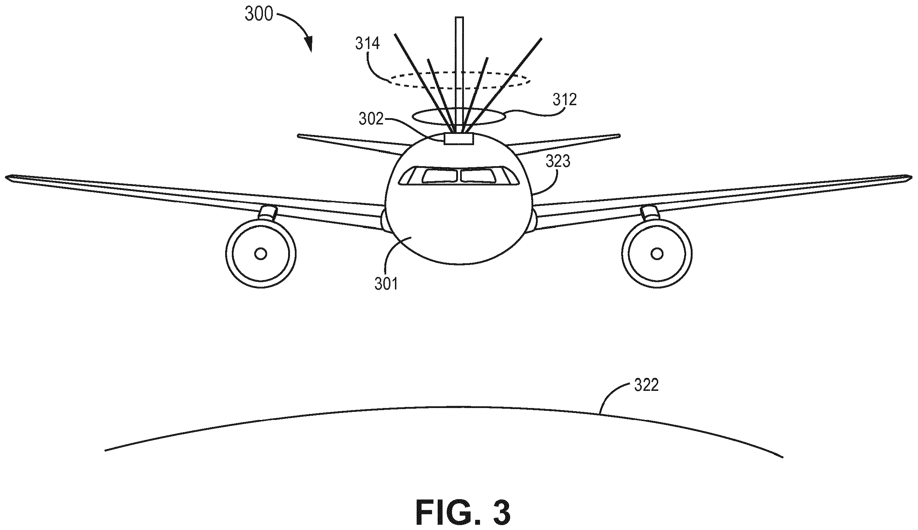

It should be understood that each of the examples and/or embodiments of Figures 2 through 11B can be used in conjunction with, or in combination with the embodiments discussed above with respect to Figure 1. Further, like named features included in Figures 1 through 10 are numbered similarly. For example, a laser particle sensor in Figure 1 is numbered 102 while a laser particle sensor in Figure 3 is numbered 302. The functions, structures, and other description of elements for such embodiments described with respect to one figure may apply to like named features included in the other figures and vice versa.

Figures 2 through 4 illustrate exemplary mounting configurations for a laser particle sensor outside the scope of the appended claims where the laser transceiver transmits the one or more laser light beams in a direction where humans are unlikely to be located. While Figures 2 through 4 depict an aircraft or components of an aircraft, it should be understood that this is for ease of illustration and that the mounting configurations can also be used for other types of vehicles as well.

Figure 2 illustrates non-claimed examples of mounting configurations 200 for laser particle sensors 202-1, 202-2, 202-3 on a vehicle 201. While three laser particle sensors 202-1, 202-2, 202-3 are shown in Figure 2, it should be understood that one or more laser particle sensors 202 may be used.

In the non-claimed example shown in Figure 2, each laser particle sensor 202-1, 202-2, 202-3 is mounted to the vehicle 201 and each laser particle sensor 202-1, 202-1, 202-3 is configured to transmit the one or more laser light beams 212-1, 212-2, 212-3 approximately parallel to a vertical axis of the body 223 of vehicle 201. In particular, the laser particle sensor 202-1, 202-2, 202-3 can be oriented to transmit the one or more laser light beams 212-1, 212-2, 212-3 vertically upward or downward from an outer surface 215 of the vehicle 201. In one example, illustrated in Figure 2, the one or more laser light beams 212-1, 212-2 that are transmitted vertically upward from the outer surface 215 of the vehicle 201, are also typically transmitted away from terrain 222 about, *e.g*. over, which the vehicle 201 travels. In another embodiment, the laser particle sensors 202-1, 202-2, 202-3 are flush mounted with the outer surface 215 of the vehicle 201 so the outer surface of the laser particle sensors 202-1, 202-2, 202-3 is aligned with the outer surface 215 of the vehicle 201.

The laser particle sensors 202-1, 202-2, 202-3 can be mounted on the upper or lower portion of the body 223 of the vehicle 201, *e.g.* a fuselage of an aircraft. Approximately parallel to the vertical axis of the body 223 of vehicle 201 means within ten degrees of an axis (*i.e.* either protruding above or below the vehicle 201) that is parallel to the vertical axis through the body 223 of the vehicle 201. Thus, the laser particle sensors 202-1, 202-2, 202-3 are mounted such that the one or more laser light beams 212-1, 212-2, 212-3 are configured to be aimed within ten degrees from the vertical axis portion of the fuselage on either the top or bottom of the vehicle 201. The measurement regions 214-1, 214-2, 214-3 for the mounting configurations shown in Figure 2 are located a selected distance from the vehicle 201. In one embodiment, the selected distance will be such that the laser particle sensor 202-1, 202-2, 202-3 will analyze freestream fluid flow, or fluid flow, *e.g.* air flow, that is undisturbed by the vehicle 201. Alternatively, the selected distance will be such that the laser particle sensor 202 will analyze fluid that is disturbed by the vehicle 201.

Figure 3 illustrates one non-claimed example of a mounting configuration 300 for a laser particle sensor 302 on a vehicle 301 according to one embodiment of the present disclosure. The example shown in Figure 3 is similar to the mounting configuration shown in Figure 2 except that the laser particle sensor 302 transmits one or more laser light beams 312 approximately parallel to the vertical axis of the vehicle 201. In one example, which is illustrated in Figure 3, four laser light beams 312 are transmitted. The laser light beams 312 are transmitted with a certain geometric relationship to one another, e.g. being separated from each other by the same angular separation and each are approximately parallel to the vertical axis of the body 323 of vehicle 301.

The one or more laser beams 312 are used by the laser particle sensor 302 to measure data in one measurement region 314 which is located a select distance away from the vehicle 301. The selected distance may be such that the laser particle sensor 302 will analyze freestream fluid flow, or fluid flow, *e.g*. air flow, that is undisturbed by the vehicle 301. Alternatively, the selected distance will be such that the laser particle sensor 302 will analyze fluid that is disturbed by the vehicle 301. The one or more laser light beams 312 may typically be directed away from the terrain 322 over which the vehicle 301 travels.

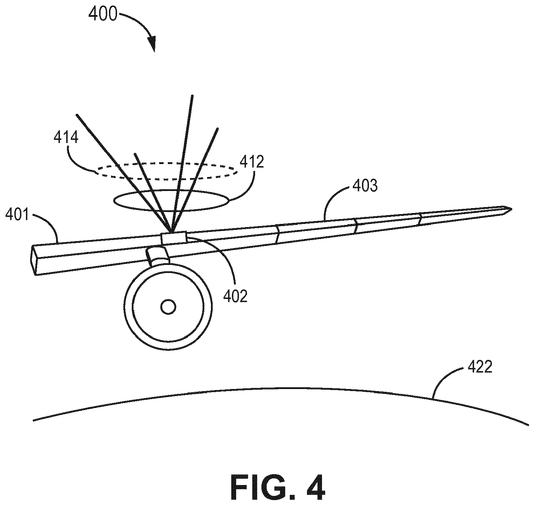

Figure 4 illustrates one non-claimed example of a mounting configuration 400 for a laser particle sensor 402 on a vehicle 401. The example shown in Figure 4 is similar to the mounting configurations 200, 300 shown in Figures 2 and 3 except that the laser particle sensor 402 is mounted on a foil 403 of the vehicle 401, *e.g.* a wing of an aircraft, as opposed to the body of the vehicle 401, *e.g.* a fuselage of an aircraft. In one embodiment, the laser particle sensor 402 is flush mounted with the surface of the foil 403 of the vehicle 401 so that the outer surface of the laser particle sensor 402 is aligned with the outer surface of the foil 403 of the vehicle 401. While the laser particle sensor 402 of Figure 4 is flush mounted with the top surface of the foil 403 and transmits one or more laser light beams 412 in an upward direction from the top surface of the foil 403 and approximately parallel to the vertical axis of the vehicle 401, it should be understood that the laser particle sensor 402 can also be flush mounted with a bottom surface of the foil 403 and configured to transmit the laser light beams 412 in a downward direction from the bottom surface of the foil 403 and approximately parallel to the vertical axis of the vehicle 401. In another example, the one or more laser light beams 412 are typically directed away from the terrain 422 over which the vehicle 401 travels.

The laser particle sensor 402 transmits one or more laser beams 412. The one or more laser beams 412 may be used by the laser particle sensor 402 to measure data in one measurement region 414 which is located a select distance away from the vehicle 401. The selected distance will be such that the laser particle sensor 402 will analyze freestream fluid flow, or fluid flow, e.g. air flow, that is undisturbed by the vehicle 401. Alternatively, the selected distance will be such that the laser particle sensor 402 will analyze fluid that is disturbed by the vehicle 401.

The laser particle sensors discussed above with respect to Figures 2 through 4 could be mounted to another component of the vehicle where the one or more laser light beams can be transmitted upward or downward from a surface of the component of the vehicle and approximately parallel to the vertical axis of the body the vehicle. The one or more laser light beams may typically be directed away from the terrain over which the vehicle travels. The laser particle sensors can also be flush mounted with an outer surface of the component of the vehicle as discussed above. In some embodiments, the other components of the vehicle include other foils of the vehicle such as a horizontal stabilizer of an aircraft.

The example mounting configurations for a laser particle sensor discussed above with respect to Figures 2 through 4 provide eye safety by transmitting the one or more laser light beams away from areas that are likely to be occupied by humans and thus cause human eye damage from exposure to the laser light beams. In particular, it is unlikely that a human would be positioned on a vehicle side that is opposite the vehicle side facing the terrain about which the vehicle travels, e.g. above the vehicle when the vehicle is above the terrain. Further, for example in such examples, by positioning a laser particle sensor within ten degrees from the vertical axis of the body of the vehicle, a reasonable amount of flexibility is provided for mounting a laser particle sensor while also limiting the area around the aircraft where the laser light beams can result in human eye exposure to optical energies exceeding the prescribed maximum permissible exposure levels.

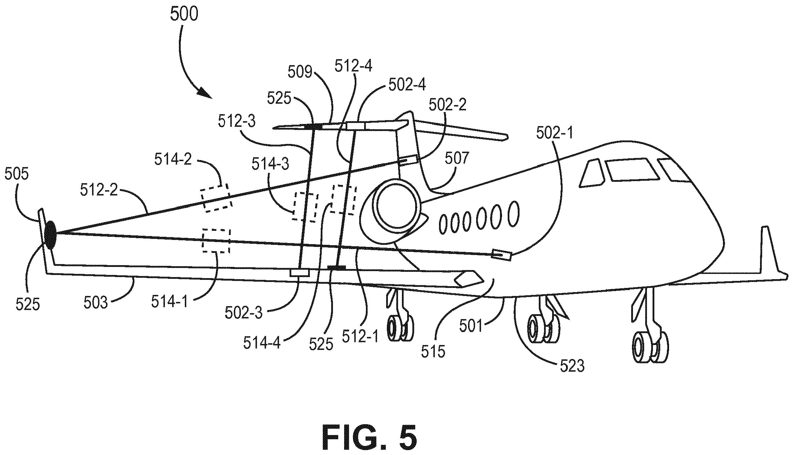

Figures 5 through 8 illustrate exemplary mounting configurations for a laser particle sensor where the one or more laser light beams are transmitted toward a portion of the vehicle to provide eye safety. While Figures 5 through 8 depict an aircraft or components of an aircraft, it should be understood that this is for ease of illustration and that similar mounting configurations could also be used for other types of vehicles as well.

Figure 5 illustrates embodiments of mounting configurations 500 for laser particle sensors 502-1, 502-2, 502-3 on a vehicle 501, according to the invention. While three laser particle sensors 502-1, 502-2, 502-3 are shown in Figure 5, it should be understood that one or more laser particle sensors 502 may be used.

In one embodiment of Figure 5, laser particle sensor 502-1 is mounted on the body 523 of the vehicle 501, *e.g.* the fuselage of the aircraft, and configured to aim the laser light beam 512-1 toward a terminal portion 505 of the foil 503 of the vehicle, *e.g.* a winglet on the wing of the aircraft. In another embodiment, the laser particle sensor 502-1 is flush mounted with an outer surface 515 of the body 523 of the vehicle 501. The terminal portion 505 is covered, at least in part, with a light absorbent material 525 where the laser light beam 512-1 contacts the surface of the winglet 505. In yet another embodiment, the light absorbent material 525 may cover a portion of the terminal portion 505 or the entire terminal portion 505. The light absorbent material 525 material that absorbs at least some incident light, diminishing the amount of incident light that is reflected. According to the invention, the light absorbent material 525 comprises a light absorbing material that is non-reflective with respect to a wavelength of the one or more laser light beams 512-1 512-2.

In one embodiment, the light absorbing material is a non-reflective material that is an opaque material that absorbs at least 50% of the optical energy at the wavelength of the one or more laser light beams 512-1, 512-2. According to the invention, the light absorbent material 525 comprises a light absorbing material that is absorbent with respect to a wavelength of the one or more laser light beams 512-1, 512-2. Examples of such light absorbent material 525 include Surrey NanoSystems' Vantablack, Edumunds' light absorbing black-out material nos. 40, 55, and 60), and Actar's Metal Velvet™, Spectral Black™, and MAXiBLACK™. In such embodiments, the light absorbent material 525 is positioned or oriented such that the one or more light beams 512-1 are reflected in a direction that is unlikely to be occupied by humans (for example, parallel to a vertical axis of the aircraft 501). A measurement region 514-1 for the laser particle sensor 502-1 is positioned between the laser particle sensor 502-1 and the terminal portion 505. The exact location of the measurement region 514-1 can be adjusted to sample a volume of fluid that is undisturbed. In one embodiment, the sampled volume of fluid is undisturbed by the vehicle 501.

In one embodiment, a laser particle sensor 502-2 is mounted on a second foil 507 of the vehicle 501, such as a vertical stabilizer of an aircraft. In another exemplary embodiment, the laser particle sensor 502-2 is flush mounted with a surface of the second foil 507. The laser particle sensor 502-2 is configured to transmit one or more laser light beams 112 toward the terminal portion 505 on the wing 503 of the aircraft 501. In a further embodiment, if both laser particle sensors 502-1, 502-2 are used in combination, as shown in Figure 5, then the laser light beams 512-1, 512-2 can be configured to contact the terminal portion 505 at the same position or at different positions. A portion of the terminal portion 505 or the entire terminal portion 505 may be covered in in light absorbent material 525 as described above.

A measurement region 514-2 for the laser particle sensor 502-2 is positioned between the laser particle sensor 502-2 and the terminal portion 505 and the exact location of the measurement region 514-2 can be adjusted to sample a volume of fluid that is undisturbed or disturbed by the vehicle 501. In one embodiment, the sampled volume of fluid is undisturbed.

In one embodiment, a laser particle sensor 502-3 is mounted on the foil 503 of the vehicle 501. In another exemplary embodiment, the laser particle sensor 502-3 is flush mounted with a surface of the foil 503. The laser particle sensor 502-3 is configured to transmit one or more laser light beams 512-3 toward a third foil 509 attached to the second foil 507, *e.g.* a horizontal stabilizer attached to the vertical stabilizer of the aircraft. In a further embodiment, at least a portion of a surface of the third foil 509 includes light absorbent material 525, described above, positioned where the one or more laser light beams 512-3 contact the surface of the third foil 509. A measurement region 514-3 for the laser particle sensor 502-3 is positioned between the laser particle sensor 502-3 and the third foil 509 and the exact location of the measurement region 514-3 can be adjusted to sample a volume of fluid that is undisturbed, *e.g.* by the vehicle 501. In another embodiment, the sampled volume of fluid is undisturbed.

In one embodiment, a laser particle sensor 502-4 may also be mounted to the third foil 509 and is configured to transmit the one or more laser light beams 512-4 toward the foil 503 or terminal portion 505. In such an embodiment, light absorbent material 525 described above, may be positioned where the one or more laser light beams 512 contact the surface of the foil 503 or terminal portion 505. The measurement region 514-4 for the laser particle sensor 502-4 would be positioned between the laser particle sensor 502-4 and the horizontal surface of the foil 503 or terminal portion 505 and the exact location of the measurement region 514-4 can be adjusted to sample a volume of fluid that is undisturbed or undisturbed by the aircraft 501. In another embodiment, the sampled volume of fluid is undisturbed.

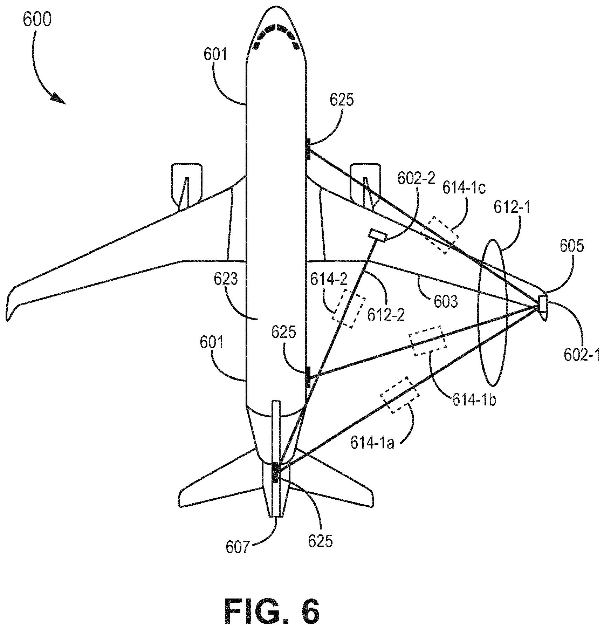

Figure 6 illustrates embodiments of mounting configurations 600 for laser particle sensors 602-1, 602-2 on a vehicle 601. While two laser particle sensors 602-1, 602-2 are shown in Figure 6, it should be understood that one or more laser particle sensors 602 may be used.

In the example embodiment of Figure 6, a laser particle sensor 602-1 is mounted on a terminal portion 605 of a foil 603 of the vehicle 601 and the laser transceiver 602-1 is configured to transmit the laser light beams 612-1 toward multiple surfaces of the vehicle 601, which includes the body 623 and the second foil 607 of the vehicle 601, *e.g.* the vertical stabilizer of the aircraft. While Figure 6 shows multiple laser light beams 612-1, it should be understood that the laser particle sensor 602-1 can be configured to transmit one or more laser light beams 602-1. In one embodiment, the laser particle sensor 602-1 is flush mounted with a surface of the terminal portion 605 of the foil 603. In another embodiment, at least portions of surfaces of the body 623 and the second foil 607 include the absorbent material 625, like described above with respect to Figure 5, positioned where the one or more laser light beams 612-1 contact the surfaces of the body 623 and the second foil 607. Measurement regions 614-1a,b,c for the laser particle sensor 602-1 is positioned between the laser particle sensor 602-1 and the surfaces of the body 623 and the second foil 607. The exact location of the measurement regions 614-la,b,c can be adjusted to sample a volume of fluid that is undisturbed or undisturbed by the vehicle 601. In a further embodiment, the sampled volume of fluid is undisturbed.

Laser particle sensor 602-2 is mounted to a foil 603 of the vehicle 601. In one embodiment, the laser particle sensor 602-2 is flush mounted with a surface of the foil 603 of the vehicle 601. The laser particle sensor 602-2 is configured to transmit one or more laser light beams 612-2 toward the second foil 607 of the vehicle 601. In another embodiment, the surface of the second foil 607 includes light absorbent material 625 like described above with respect to Figure 5, positioned where the one or more laser light beams 612-2 contact the surface of the second foil 607. A measurement region 614-2 for the laser particle sensor 602-2 is positioned between the laser particle sensor 602-2 and the second foil 607 and the exact location of the measurement region 614-2 can be adjusted to sample fluid that is undisturbed or disturbed by the vehicle 601. In a further embodiment, the sampled volume of fluid is undisturbed.

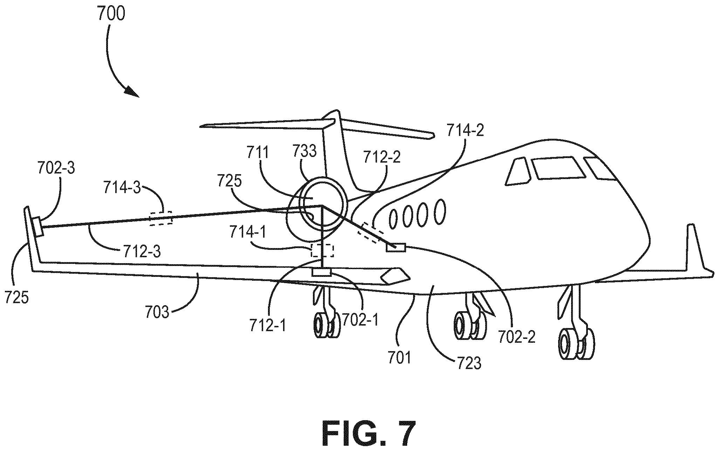

Figure 7 illustrates embodiments of mounting configurations 700 for laser particle sensors 702-1, 702-2, 702-3 on a vehicle 701. In particular, Figure 7 illustrates a mounting configuration 700 that directs the laser light beams 712 toward an engine inlet 711 of an engine 733 of a vehicle 701. While three laser particle sensors 702-1, 702-2, 702-3 are shown in Figure 7, it should be understood that one or more laser particle sensors may be used.

In the example embodiment of Figure 7, laser particle sensor 702-1 is mounted on the foil 703 of the vehicle 701 and the laser transceiver is configured to transmit one or more laser light beams 712-1 toward the engine inlet 711 of the engine 733. In one embodiment, the laser particle sensor 702-1 is flush mounted with a surface of the foil 703 of the vehicle 701. In another embodiment, the one or more laser light beams 712-1 are transmitted to contact fans, e.g. fan blades, of the engine 733. In another embodiment, the one or more laser light beams 712-1 are transmitted to contact a surface of the engine inlet 711. In such embodiments, the surface, *e.g*. interior surface, of the engine inlet 711 can include light absorbent material, like described above with respect to Figure 5, positioned where the one or more laser light beams 712-1 contact the surface of the engine inlet 711. A measurement region 714-1 for the laser particle sensor 701-2 is positioned between the laser particle sensor 701-2 and the engine inlet 711. The exact location of the measurement region 714-1 can be adjusted to sample a volume of fluid that is disturbed or undisturbed by the vehicle 701. In a further embodiment, the sampled volume of fluid is undisturbed.

Laser particle sensor 702-2 is mounted to the body 723 of the vehicle 701. In one embodiment, the laser particle sensor 702-2 is flush mounted with a surface of the body 723 of the vehicle 701. The laser particle sensor 702-2 is configured to transmit one or more laser light beams 712-2 toward the engine inlet 711. In another embodiment, the one or more laser light beams 712-2 are transmitted to contact the fans of the engine 733. In a further embodiment, the one or more laser light beams 712-2 are transmitted to contact a surface within the engine inlet 711. In yet another embodiment, the surface of the engine inlet 711 can include light absorbent material, like described above with respect to Figure 5, positioned where the one or more laser light beams 712-1 contact the surface of the engine inlet 711. The measurement region 714-2 for the laser particle sensor 702-2 is positioned between the laser particle sensor 702-2 and the engine inlet 711. The exact location of the measurement region 714-2 can be adjusted to sample a volume of fluid that is disturbed or undisturbed by the vehicle 701. In a further embodiment, the sampled volume of fluid is undisturbed.

In one embodiment, a laser particle sensor 702-3 may also be mounted on the terminal portion 725 of the foil 703 or on another component of the aircraft 701. The laser particle sensor 702-3 is configured to transmit one or more laser light beams 712-3 toward the engine inlet 711. In another embodiment, the one or more laser light beams 712-2 are transmitted to contact the fans of the engine 733. In a further embodiment, the one or more laser light beams 712-3 are transmitted to contact a surface within the engine inlet 711. In yet another embodiment, the surface of the engine inlet 711 can include light absorbent material, like described above with respect to Figure 5, positioned where the one or more laser light beams 712-1 contact the surface of the engine inlet 711. The measurement region 714-3 for the laser particle sensor 702-2 is positioned between the laser particle sensor 702-2 and the engine inlet 711. The exact location of the measurement region 714-3 can be adjusted to sample a volume of fluid that is disturbed or undisturbed by the vehicle 701. In a further embodiment, the sampled volume of fluid is undisturbed.

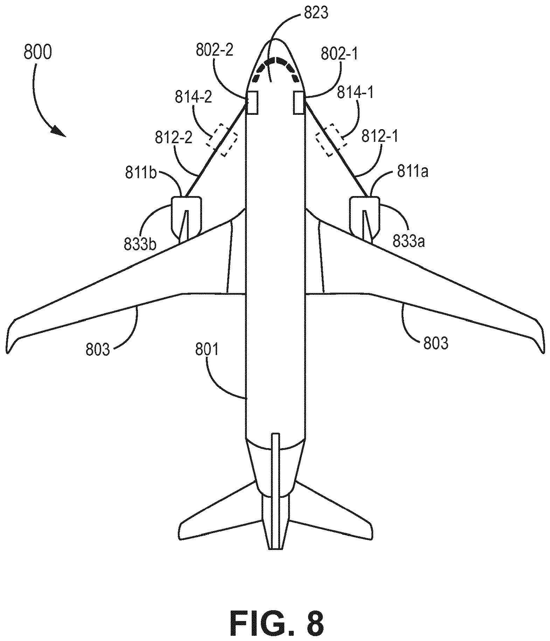

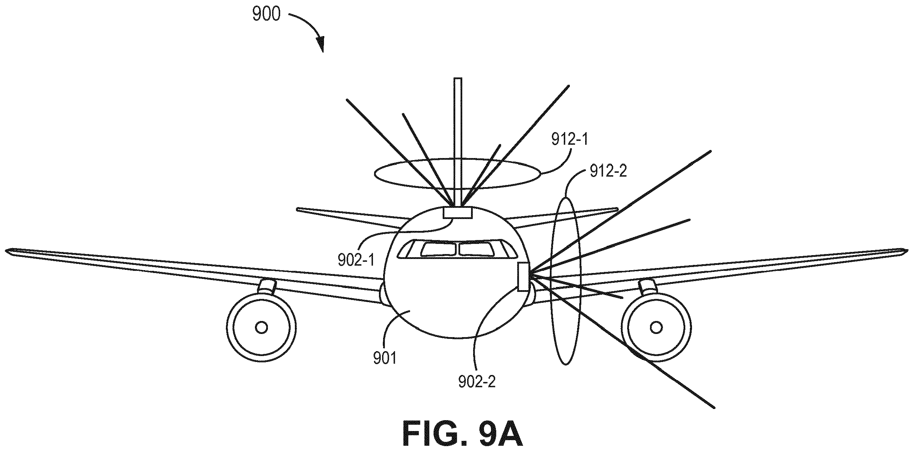

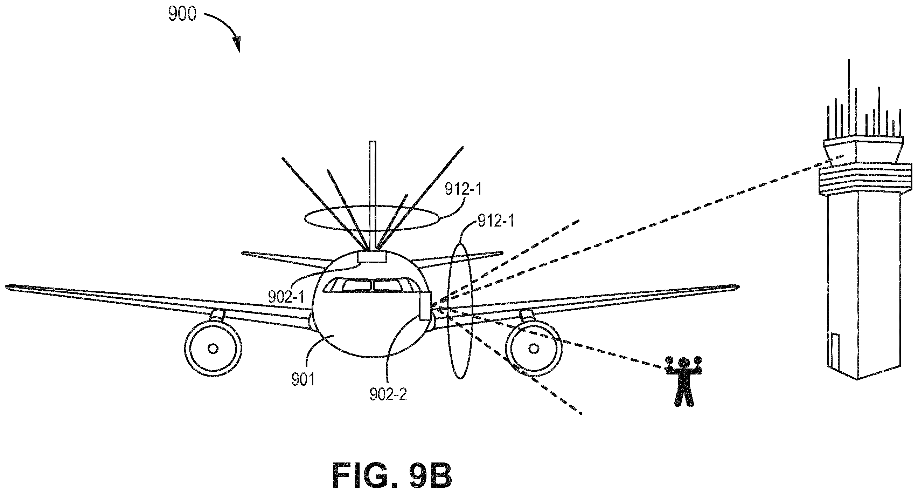

Figure 8 illustrates embodiments of mounting configurations for one or more laser particle sensors 802-1, 802-2 on a vehicle 801. While two laser particle sensors 802-1, 802-2 are shown in Figure 9, it should be understood that one or more laser particle sensors may be used.

For a vehicle 801 having engine inlets 811a,b positioned below the foils 803a, 803b, the laser particle sensors 802-1, 802-1 may be mounted to body 823. The laser particle sensors 802-1, 802-2 are configured to transmit the laser light beams 812-1, 812-2 toward engine inlets 811a,b of engines 833a,b of the vehicle 801. In another embodiment, the one or more laser light beams 812-1, 812-2 are transmitted to contact the fans of the engines 833a,b. In a further embodiment, the one or more laser light beams 812-1, 812-2 are transmitted to contact surfaces within an engine inlets 811a,b. In yet another embodiment, the surfaces of the engine inlets 811a,b can include light absorbent material, like described above with respect to Figure 5, positioned where the one or more laser light beams 812-1, 812-2 contact the surfaces of the engine inlets 811a,b. The measurement regions 814-1, 814-2 for the laser particle sensors 802-1, 802-2 are positioned between each of the laser particle sensors 802-1, 802-2 and each respective engine inlet 811a,b. The exact location of the measurement regions 814-1, 814-2 can be adjusted to sample a volume of fluid that is disturbed or undisturbed by the vehicle 801. In a further embodiment, the sampled volume of fluid is undisturbed.

The example mounting configurations for a laser particle sensor discussed above with respect to Figures 5 through 8 provide eye safety by transmitting the laser light beams toward another component of the vehicle where the path between the laser particle sensor and the other component of the vehicle is unlikely to be occupied by humans and cause damage from exposure to the laser light beams. Further, since some of the mounting configurations attenuate the laser light beams at the aircraft, the eye safety risk can be limited to the radius of the aircraft rather than the distance it takes for the wavelength of the laser light beams to attenuate in air.

Figures 9A and 9B illustrate examples of multiple stages of operation of laser particle sensors 902-1, 902-2 mounted on a vehicle 901. For example, Figure 9A represents exemplary operation of one or more laser particle sensors on a vehicle 901 during low eye safety risk operating parameters of the vehicle 901 (e.g. during the travel of the vehicle 901 such as flight of an aircraft) and Figure 9B represents operation of the one or more laser particle sensors on a vehicle 901 during high eye safety risk operating parameters of the vehicle 901 (*e.g*. during commencement or termination of travel of the vehicle 901 such as take-off or landing of an aircraft). While two laser particle sensors 902-1, 902-2 are shown in Figures 9A and 9B, it should be understood that one or more laser particle sensors 902 may be used. Further, while specific examples of operation are illustrated with respect to an aircraft, it should be understood that the methods of operation are similarly applicable to other types of vehicles as well.

A first laser particle sensor 902-1 is mounted to the vehicle 901 and operates in a similar manner to that of laser particle sensor 302-1 described above with respect to Figure 3. The laser particle sensor 902-1 is configured to transmit the one or more laser light beams 912-1 approximately parallel to a vertical axis of the body of the vehicle 901, and, e.g. away from the terrain over which the vehicle 901 travels. The second laser particle sensor 902-2 is mounted to a side portion of the vehicle 901 and the one or more laser light beams 912-2 are not necessarily blocked or terminated by contacting a portion of the vehicle 901.

During low eye safety risk operating circumstances for the vehicle 901, eye safety is not a major concern because humans are unlikely to be exposed to the one or more laser light beams 912-1, 912-2. Accordingly, both laser particle sensors 912-1, 912-2 can generally be operated in a normal power mode, e.g. at full power, without increasing the risk of exposure to optical energies that exceed the prescribed maximum permissible exposure levels.

However, as illustrated in Figure 9B, during high eye safety risk operating circumstances for the vehicle 901, humans in proximate vehicles, ground crew, air traffic controllers, and others can be exposed to the one or more laser light beams 912-2 if operation of the laser particle sensor 912-2 is not modified. Therefore, the second laser particle sensor 902-2 is configured to operate in a low power mode, e.g. to attenuate power of the one or more laser light beams 912-2 based on one or more operating parameters of the vehicle 901. For example, in low power mode no laser light beam(s) are generated. For example, if an error or failure is detected in a laser particle sensor, then it generates no laser light beam(s).

In one embodiment, the laser particle sensor 902-2 is controlled by the processing system 116. In another embodiment, when in low power mode, the processing system 116 controls a shutter (*e.g*., a mechanical shutter) in the optics 106 to block transmission of the one or more laser light beams 912-2. In a further embodiment, when in low power mode, the processing system 116 provides a control signal to the second laser particle sensor 902-2 to disable the optical transceiver 104 to terminate transmission of the one or more laser light beams 912-2, or to have the optical transceiver 104 reduce the power of the one or more laser light beams 912-2. One or more of the foregoing techniques can be used to place a laser particle sensor in low power mode. In yet another embodiment, when in low power mode, the power level of the one or more laser light beams 912-2 is reduced to zero. In yet a further embodiment, the power level of the laser light beams 912-2 may be similarly reduced to a level that will not be harmful to human eyes in portions of the one or more laser light beams 912-2 that would likely be incident on humans.

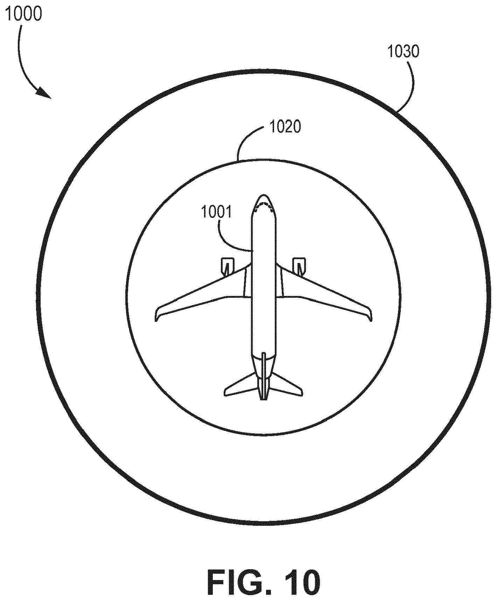

Figure 10 illustrates safe zone ranges for operation of a laser particle sensor. In particular, a safe zone range outside of a safe zone limit 1030 for a normal power mode of the laser particle sensor of the aircraft 1001 is farther away from the vehicle 1001 than a safe zone range outside of a safe zone limit 1020 for a low power mode of the laser particle sensor.

Referring back to Figures 9A and 9B, the one or more operating parameters of the vehicle 901 that determine whether, *e.g*. the second laser particle sensor 902-2 operates in normal or low power mode can include a geographic location of the vehicle 901, altitudes, *e.g*. corresponding to geographic locations such as near or at ground level where ground level varies based upon terrain, and vector velocity of the vehicle 901. The selected geographic locations may include locations at an airport (*e.g*., the gate or runway) or other areas where there is a high likelihood that humans will be exposed to the one or more laser light beams 912-2. In another example, a list of the selected geographic locations and a range of coordinates for the selected geographic locations, and possibly corresponding threshold altitudes, are generated and stored in the data 113 in memory 110. The processing system 116 can obtain the geographic location of the vehicle 901 from a measurement system 133, *e.g.* a location measurement system, and compare the geographic location with geographic location information stored in the data113. When the processing system 116 determines that the vehicle is located at one of the geographic locations where one or more laser particle sensors, *e.g*. laser particle sensor 902-2, are to be placed in low power mode, then the processing system 116 places such one or more laser particle sensors in low power mode.

The one or more operating parameters of the vehicle 901 that determine whether, *e.g*. the second laser particle sensor 902-2 operates in normal or low power mode can include the vector velocity of the vehicle 901. Such determination may be based on whether the vector velocity of a vehicle 901 exceeds a threshold vector velocity. Threshold vector velocities include the vector velocities required for vehicle launch and landing, e.g. aircraft takeoff and landing. Thus, when the vehicle 901 attains or exceeds a vehicle launch vector velocity, the laser particle sensor would be transition from low to normal power mode. When the vehicle attains or falls below a vehicle landing vector velocity, the laser particle sensor would be transition from normal to low mode. The threshold speed may be determined based on the power of the laser light beam and possible exposure time for an eye when the vehicle is travelling at a certain speed. For example, if a vehicle is travelling at a high rate of speed, the possible exposure time might be short enough where the power of the laser light beams 912-2 is not a concern even during ground operations.

The one or more operating parameters of the vehicle 901 can include a stage of transportation of the vehicle 901. Where the vehicle 901 is an aircraft, the stage of transportation may include taxiing, takeoff, in-flight, landing, and the like. The operator of the vehicle may identify such stages. Vehicle systems may automatically determine such stages, *e.g.* based upon vehicle speed, weight on wheels, etc. It can be determined what stages of operation correlate to situations where human exposure to the laser light beams is a concern (*e.g.,* taxiing, at the gate, or during landing) and the laser particle sensor 902-2 can be placed in in a lower power mode during those stages of operation. During other stages of operation of the vehicle 901, the laser particle sensor 902-2 can be operated in normal power mode.

The one or more operating parameters of the vehicle can include a Weight on Wheels logic or other Air/Ground logic, where the laser particle sensor 902-2 is placed in in a lower power mode when it is determined that the vehicle 901 is on the ground, *e.g*. because there is weight on the wheels of the vehicle 901. However, when the vehicle 901 is in the air, the laser particle sensor 902-2 can be operated in a full power mode.

The techniques for operation of the laser particle sensor discussed above with respect to Figures 9A through 10 may also be combined with the mounting configurations discussed above with respect to Figures 2 through 8 to improve the eye safety of the laser particle sensor with particular mounting configurations by further reducing the risk of exposure to the laser light beams.

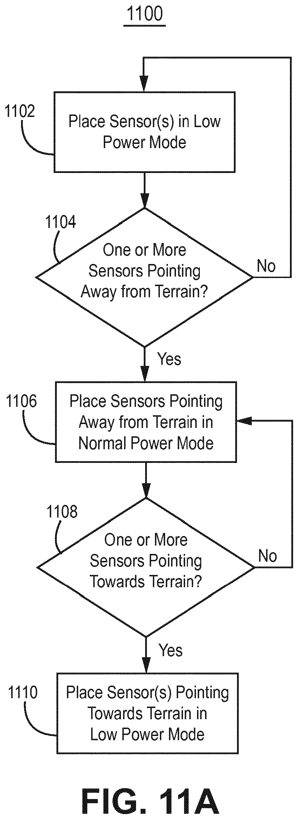

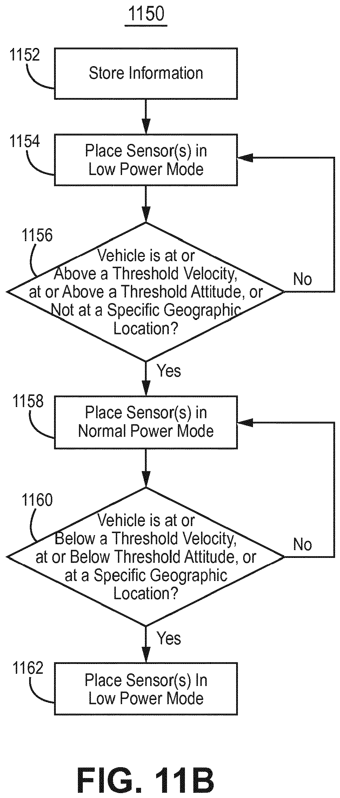

Figures 11A and 11B illustrate further examples of operation of exemplary laser particle sensors configured for eye safety. The examples of methods shown in Figure 11A and 11B are described here as being implemented in the system illustrated herein, though it is to be understood that other examples can be implemented in other ways. The blocks of the flow diagrams have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner).

Figure 11A illustrates an example of operation 1100 of one or more laser particle sensors configured so that each of the one or more laser particle sensors operates in a normal power mode when each would project light away from terrain over which a vehicle, on which the one or more laser particle sensors are mounted, travels. In block 1102, place the one or more laser particle sensors in a low power mode. In block 1104, determine whether each of the one or more laser particle sensors is pointing away from the terrain, *i.e.* whether the laser light beams projected by each of the one or more particle sensors points away from the terrain. In one example, also determine whether each of the one or more laser particle sensors is pointing approximately one hundred and eighty degrees away from the terrain. In one example, the determination of direction of which way the one or more laser particle sensors is pointing can be made by the processing system 116 based upon information from, *e.g.* an inertial navigation system or management unit in the vehicle. If none of the one or more laser particle sensors is pointing away from the terrain, then maintain the laser particle sensors in the low power mode, *e.g.* return to block 1102.

If one or more of the one or more laser particle sensors is pointing away from the terrain, in block 1106, then place the each of the one or more laser particle sensors that are pointing away from the terrain in the normal power mode. In one example, place the each of the one or more laser particle sensors that are pointing approximately one hundred and eighty degrees away from the terrain in the normal power mode. In one example, the processing system 116 places each of the one or more laser particle sensors in the normal power mode.

Then, in block 1108 determine whether each of the one or more laser particle sensors in the normal power mode are pointing towards the terrain, *i.e.* whether the laser light beams projected by each of the one or more particle sensors points towards the terrain. In one example, also determine whether each of the one or more laser particle sensors in the normal power mode are pointing approximately zero degrees towards the terrain. The determination of direction of which way the one or more laser particle sensors is pointing can be made by the processing system 116 based upon information from, *e.g.* an inertial navigation system or management unit in the vehicle. If none of the one or more laser particle sensors in a normal power mode are pointing towards the terrain, then maintain those laser particle sensors in the normal power mode, and repeat block 1108. If one or more laser particle sensors in the normal power mode are pointing towards the terrain, in block 1110, then place those one or more laser particle sensors in the low power mode.

Figure 11B illustrates an example of operation 1150 of one or more laser particle sensors configured so that only laser particle sensor(s) operate in a normal power mode when the vehicle, on which the one or more laser particle sensors are mounted, is traveling at or above a specified or threshold altitude, is not at a specific geographic location, or is travelling at or above a specified or threshold vector velocity. In block 1152, store threshold altitudes at or above which, geographic locations at, or threshold vector velocities at or above which the one or more laser particle sensors are placed in the normal power mode. The altitude and vector velocity thresholds may vary by geographic location. In a further example, such altitude and vector velocity thresholds (and any corresponding geographic locations if any), and geographic locations, *e.g.* vehicle terminals such as airports, are stored in the processing system 116, *e.g.* in the data 113 in the memory 110. In one example, in block 1154, place the one or more laser particle sensors in a low power mode.

In block 1156, determine whether the vehicle is traveling at or above a specified or threshold altitude, is not at a specific geographic location, or is travelling at or above a specified or threshold vector velocity. In one example, determination as to whether the vehicle is traveling at or above a threshold altitude, is not at a specific geographic location, or is travelling at or above a threshold vector velocity can be made by the processing system 116 in conjunction with one or more measurement systems 113. The processing system 116 compares the data from the one or more sensor systems to determine whether to place the one or more laser particle sensors in the normal power mode. In another example, if the vehicle is not traveling at or above a specified altitude, is at a specific geographic location, and is not travelling at or above a vector velocity, then place or maintain the one or more laser particle sensors in the low power mode, *e.g.* return to block 1154. In a further example, if the vehicle is traveling at or above a specified altitude, is not at a specific geographic location, and is travelling at or above a vector velocity, then proceed to block 1158.

In block 1158, if the vehicle is traveling at or above a threshold altitude, is not at a specific geographic location, or is travelling at or above a threshold vector velocity, then place the one or more laser particle sensors in the normal power mode.

In block 1160, determine whether the vehicle is traveling at or below a threshold altitude, is at a specific geographic location, or is travelling at or below a threshold vector velocity. In one example, determination as to whether the vehicle is traveling at or below a threshold altitude, is at a specific geographic location, or is travelling at or below a threshold vector velocity can be made by the processing system 116 in conjunction with one or more measurement systems 113. The processing system 116 compares the data from the one or more sensor systems to determine whether to place the one or more laser particle sensors in the normal power mode. In another example, if the vehicle is not traveling at or below a specified altitude, is not at a specific geographic location, and is not travelling at or below a vector velocity, then place or maintain the one or more laser particle sensors in the normal power mode, *e.g.* return to block 1158. In a further example, if the vehicle is traveling at or below a specified altitude, is at specific geographic location, and is travelling at or below a vector velocity, then proceed to block 1162.

In block 1162, if the vehicle is traveling at or below a threshold altitude, is at a specific geographic location, or is travelling at or below a threshold vector velocity, then place the one or more laser particle sensors in the low power mode.

In various alternative examples and/or embodiments, system elements, method steps, or examples described throughout this disclosure (such as the at least one processing device 108, or sub-parts thereof, for example) may be implemented using one or more computer systems, field programmable gate arrays (FPGAs), or similar devices and executing code to realize those elements, processes, or examples, said code stored on a non-transient data storage device. Therefore other embodiments of the present disclosure may include elements comprising program instructions resident on computer readable media which when implemented by such computer systems, enable them to implement the embodiments described herein. As used herein, the term "computer readable media" refers to tangible memory storage devices having non-transient physical forms. Such non-transient physical forms may include computer memory devices, such as but not limited to punch cards, magnetic disk or tape, any optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device having a physical, tangible form. Program instructions include, but are not limited to computer-executable instructions executed by computer system processors and hardware description languages such as Very High Speed Integrated Circuit (VHSIC) Hardware Description Language (VHDL).

The term "vertical" refers to a direction perpendicular to the horizontal. Terms such as "on," "side" (as in "sidewall"), "higher," "lower," "over," "top," and "under" are defined with respect to the conventional plane or working surface being on the top surface, regardless of orientation.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the appended claims.

## Claims

1. A system, comprising:
a vehicle (101, 501, 601, 701, 801);
a laser particle sensor (102, 502, 602, 702, 802) mounted on a first portion of the vehicle (101, 501, 601, 701, 801), wherein the laser particle sensor (102, 502, 602, 702, 802) comprises: an optical system (103) and a processing system (116) coupled to the optical system (103);
wherein the optical system (103) is configured to transmit one or more laser light beams (112, 512, 612, 712, 812) through a selected measurement region to detect particles in a volume of freestream fluid;
and wherein the optical system (103) is configured to receive a backscattered portion of the one or more laser light beams (112, 512, 612, 812) transmitted by the optical system (103);
**characterized in that** a second portion of the vehicle (101, 501, 601, 701, 801) is covered with a light absorbent material (525, 625) which is a non-reflective material that is absorbent with respect to a wavelength of the one or more light beams (112, 512, 612, 712, 812), and wherein the optical system (103) is arranged to transmit the one or more laser light beams (112, 512, 612, 712, 812) toward the second portion of the vehicle (101, 501, 601, 701, 801) to terminate the one or more laser light beams (112, 512, 612, 712, 812) on the second portion of the vehicle (101, 501, 601, 701, 801).

2. The system of claim 1, wherein the second portion of the vehicle comprises one of a portion of a body (523, 623, 723, 823), foil (503, 603, 703, 803), and an engine (733, 833).

3. The system of claim 1, wherein the optical system (104) comprises an optical transceiver (103).

4. The system of claim 1, further comprising one or more additional measurement systems (133) coupled to the processing system (116).

5. The system of claim 4, wherein the one or more additional measurement system comprises at least one of an altimeter system and a speed and direction measuring system.

6. The system of claim 5, wherein the speed and direction measuring system comprises at least one of: a pitot tube and compass, an inertial navigation system, and a location determination system.

7. A method, comprising:
transmitting, by an optical system (103) comprised in a laser particle sensor (102, 502, 602, 702, 802) mounted to a vehicle (101, 501, 601, 701, 801) on a first position, one or more laser light beams (112, 512, 612, 712, 812) from the first portion of the vehicle (101, 501, 601, 701, 801) toward a second portion of the vehicle (101, 501, 601, 701, 801) through a selected measurement region to detect particles in a volume of freestream fluid;
terminating the one or more light beams (112, 512, 612, 712, 812) on the second portion of the vehicle (101, 501, 601, 701, 801), wherein the second portion of the vehicle is covered with a light absorbent material (525, 625), wherein the light absorbent material (525, 625) is a non-reflective material that is absorbent with respect to a wavelength of the one or more light beams (112, 512, 612, 712, 812); and
receiving, by the optical system (103), a backscattered portion of the one or more laser light beams (112, 512, 612, 712, 812).

8. The method of claim 7, wherein terminating the one or more light beams on the second portion of the vehicle comprises terminating the one or more light beams on one of a portion of a body (523, 623, 723, 823), foil (503, 603, 703, 803), and an engine (733, 833).

## Patentansprüche

1. System, umfassend:
ein Fahrzeug (101, 501, 601, 701, 801);
einen Laserpartikelsensor (102, 502, 602, 702, 802), der auf einem ersten Teil des Fahrzeugs (101, 501, 601, 701, 801) angebracht ist, wobei der Laserpartikelsensor (102, 502, 602, 702, 802) umfasst: ein optisches System (103) und ein Verarbeitungssystem (116), das mit dem optischen System (103) gekoppelt ist;
wobei das optische System (103) konfiguriert ist, um einen oder mehrere Laserlichtstrahlen (112, 512, 612, 712, 812) durch einen ausgewählten Messbereich zu übertragen, um Partikel in einem Volumen von Freistromfluid zu detektieren;
und wobei das optische System (103) konfiguriert ist, um einen rückgestreuten Teil des einen oder der mehreren durch das optische System (103) übertragenen Laserlichtstrahlen (112, 512, 612, 812) zu empfangen;
**dadurch gekennzeichnet, dass** ein zweiter Teil des Fahrzeugs (101, 501, 601, 701, 801) mit einem lichtabsorbierenden Material (525, 625) bedeckt ist, das ein nicht reflektierendes Material ist, das in Bezug auf eine Wellenlänge des einen oder der mehreren Lichtstrahlen (112, 512, 612, 712, 812) absorbierend ist, und wobei das optische System (103) angeordnet ist, um den einen oder die mehreren Laserlichtstrahlen (112, 512, 612, 712, 812) in Richtung des zweiten Teils des Fahrzeugs (101, 501, 601, 701, 801) zu übertragen, um den einen oder die mehreren Laserlichtstrahlen (112, 512, 612, 712, 812) auf dem zweiten Teil des Fahrzeugs (101, 501, 601, 701, 801) zu stoppen.

2. System nach Anspruch 1, wobei der zweite Teil des Fahrzeugs einen von einem Teil eines Körpers (523, 623, 723, 823), einer Tragfläche (503, 603, 703, 803) und eines Triebwerks (733, 833) umfasst.

3. System nach Anspruch 1, wobei das optische System (104) einen optischen Sender-Empfänger (103) umfasst.

4. System nach Anspruch 1, ferner umfassend eines oder mehrere zusätzliche Messsysteme (133), das/die mit dem Verarbeitungssystem (116) gekoppelt ist/sind.

5. System nach Anspruch 4, wobei das eine oder die mehreren zusätzlichen Messsysteme mindestens eines von einem Höhenmessersystem und einem Geschwindigkeits- und Richtungsmesssystem umfassen.

6. System nach Anspruch 5, wobei das Geschwindigkeits- und Richtungsmesssystem mindestens eines umfasst von: einem Staurohr und einem Kompass, einem Trägheitsnavigationssystem und einem Standortbestimmungssystem.

7. Verfahren, umfassend:
Übertragen eines oder mehrerer Laserlichtstrahlen (112, 512, 612, 712, 812) von dem ersten Teil des Fahrzeugs (101, 501, 601, 701, 801) durch ein optisches System (103), das in einem Laserpartikelsensor (102, 502, 602, 702, 802) enthalten ist, der an einem Fahrzeug (101, 501, 601, 701, 801) an einer ersten Position angebracht ist, zu einem zweiten Teil des Fahrzeugs (101, 501, 601, 701, 801) durch einen ausgewählten Messbereich, um Partikel in einem Volumen von Freistromfluid zu detektieren;
Stoppen des einen oder der mehreren Lichtstrahlen (112, 512, 612, 712, 812) auf dem zweiten Teil des Fahrzeugs (101, 501, 601, 701, 801), wobei der zweite Teil des Fahrzeugs mit einem lichtabsorbierenden Material (525, 625) bedeckt ist, wobei das lichtabsorbierende Material (525, 625) ein nicht reflektierendes Material ist, das in Bezug auf eine Wellenlänge des einen oder der mehreren Lichtstrahlen (112, 512, 612, 712, 812) absorbierend ist; und
Empfangen eines rückgestreuten Teils des einen oder der mehreren Laserlichtstrahlen (112, 512, 612, 712, 812) durch das optische System (103).

8. Verfahren nach Anspruch 7, wobei das Stoppen des einen oder der mehreren Lichtstrahlen auf dem zweiten Teil des Fahrzeugs das Stoppen des einen oder der mehreren Lichtstrahlen auf einem von einem Teil eines Körpers (523, 623, 723, 823), einer Tragfläche (503, 603, 703, 803) und eines Triebwerks (733, 833) umfasst.

## Revendications

1. Système comprenant :
un véhicule (101, 501, 601, 701, 801) ;
un capteur de particules laser (102, 502, 602, 702, 802) monté sur une première partie du véhicule (101, 501, 601, 701, 801), dans lequel le capteur de particules laser (102, 502, 602, 702, 802) comprend : un système optique (103) et un système de traitement (116) couplé au système optique (103) ;
dans lequel le système optique (103) est conçu pour transmettre un ou plusieurs faisceaux de lumière laser (112, 512, 612, 712, 812) à travers une région de mesure sélectionnée pour détecter des particules dans un volume de fluide à flux libre ;
et dans lequel le système optique (103) est conçu pour recevoir une partie rétrodiffusée du ou des faisceaux de lumière laser (112, 512, 612, 812) transmis par le système optique (103) ;
**caractérisé en ce qu'**une seconde partie du véhicule (101, 501, 601, 701, 801) est recouverte d'un matériau absorbant la lumière (525, 625) qui est un matériau non réfléchissant qui est absorbant par rapport à une longueur d'onde du ou des faisceaux de lumière (112, 512, 612, 712, 812) et dans lequel le système optique (103) est agencé pour transmettre le ou les faisceaux de lumière laser (112, 512, 612, 712, 812) vers la seconde partie du véhicule (101, 501, 601, 701, 801) pour terminer le ou les faisceaux de lumière laser (112, 512, 612, 712, 812) sur la seconde partie du véhicule (101, 501, 601, 701, 801).

2. Système selon la revendication 1, dans lequel la seconde partie du véhicule comprend un élément parmi une partie d'un corps (523, 623, 723, 823), une feuille (503, 603, 703, 803) et un moteur (733, 833).

3. Système selon la revendication 1, dans lequel le système optique (104) comprend un émetteur-récepteur optique (103).

4. Système selon la revendication 1, comprenant en outre un ou plusieurs systèmes de mesure (133) supplémentaires couplés au système de traitement (116).

5. Système selon la revendication 4, dans lequel le ou les systèmes de mesure supplémentaires comprennent au moins un élément parmi un système d'altimètre et un système de mesure de vitesse et de direction.

6. Système selon la revendication 5, dans lequel le système de mesure de vitesse et de direction comprend au moins un élément parmi : un tube de Pitot et un compas, un système de navigation inertielle et un système de détermination d'emplacement.

7. Procédé comprenant :
la transmission, par un système optique (103) compris dans un capteur de particules laser (102, 502, 602, 702, 802) monté sur un véhicule (101, 501, 601, 701, 801) sur une première position, un ou plusieurs faisceaux de lumière laser (112, 512, 612, 712, 812), de la première partie du véhicule (101, 501, 601, 701, 801) vers une seconde partie du véhicule (101, 501, 601, 701, 801) à travers une région de mesure sélectionnée pour détecter des particules dans un volume de fluide à flux libre ;
la terminaison du ou des faisceaux de lumière (112, 512, 612, 712, 812) sur la seconde partie du véhicule (101, 501, 601, 701, 801), dans lequel la seconde partie du véhicule est recouverte d'un matériau absorbant la lumière (525, 625), dans lequel le matériau absorbant la lumière (525, 625) est un matériau non réfléchissant qui est absorbant par rapport à une longueur d'onde du ou des faisceaux de lumière (112, 512, 612, 712, 812) ; et
la réception, par le système optique (103), d'une partie rétrodiffusée du ou des faisceaux de lumière laser (112, 512, 612, 712, 812).

8. Procédé selon la revendication 7, dans lequel la terminaison du ou des faisceaux de lumière sur la seconde partie du véhicule comprend la terminaison du ou des faisceaux de lumière sur un élément parmi une partie d'un corps (523, 623, 723, 823), une feuille (503, 603, 703, 803) et un moteur (733, 833).
